# EUROPEAN PATENT APPLICATION

(11) **EP 3 832 012 A1**
(43) Date of publication of application: **09.06.2021**
(21) Application number: 20212096.0
(22) Date of filing: 07.12.2020
(51) Int. Cl.: D21H 11/04, B65D 1/34, B65D 81/34, B65D 85/00, D21H 27/10, D21H 27/30

(54) **COVER FOR DISPOSABLE PACKAGING**

(30) Priority: 05.12.2019 SE 1951401
(71) Applicant: AR Packaging Flexibles AB, 221 00 Lund (SE)
(72) Inventor: SANDBERG, Anja, 221 00 Lund (SE)
(74) Representative: Valea AB

(57) **Abstract**

A packaging (100) comprising a support part (120) for supporting packaged goods (150) and a cover part (110) for covering the packaged goods (150), the support part (120) and the cover part (110) being formed from separate materials and being sealed together in a border seal (130) extending along superposed peripheral edge portions of the support part (120) and the cover part (110), the cover part (110) comprising or consisting of a structural paper layer (111). The structural paper layer (111) of the cover part (110) is made from virgin softwood pulp fibers and constitutes from 50% by weight to 100% by weight of the cover part (110), the structural paper layer (111) having a basis weight of from 60 g/m² to 200 g/m² as measured according to ISO 536 and an elongation at break of at least 8%, such as an elongation at break of from 9.5% to 17% in a cross machine direction (CD), and an elongation at break of at least 9%, such as an elongation at break of from 10% to 20% in a machine direction (MD) as measured according to ISO 1924-3.

## Description

### TECHNICAL FIELD

The invention pertains to a packaging comprising a support part for supporting packaged goods and a cover part for covering packaged goods, the support part and the cover part being formed from separate materials and being sealed together in a border seal extending along superposed peripheral edge portions of the support part and the cover part, the cover part comprising or consisting of a paper layer.

### BACKGROUND

Food products such as ham, salami, cheese, meat, vegetables, etc. are often sold in heat sealed packaging formed from laminated materials having controlled permeability. The packaging materials help to keep the food products fresh before opening.

A typical construction for this type of packaging comprises a support part which may be a thermoformed tray or a bottom sheet on which the food products are placed. The support part is then covered by a thin, flexible cover part and the packaging is sealed tight by joining superposed edge portions of the support part and the cover part. Such joining is commonly made by heat sealing.

The packaging is generally made from plastic laminates which can be readily thermoformed, heat sealed and which are durable, moisture resistant, liquid impermeable and which can also be gas impermeable. In order to provide properties such as heat sealability, gas impermeability, puncture resistance, tear strength, etc. the laminates are formed from combinations of polymers such as polyamides, polyesters, polyolefins, etc. Polyamides are generally used for their superior strength and puncture resistance, while polyolefins, such as polyethylene is used for thermosealing purposes.

With a rising environmental concern there is a desire to minimize the amount of plastic material being used in connection with disposable articles such as a packaging which is thrown away after a single use and which once emptied of its contents is not intended for being restored and reused as a packaging. It is a particular concern to minimize the use of composite plastic materials which are difficult to handle in recycling facilities.

Paperbased materials have traditionally been considered less suitable for use in making covers for packaging trays as they are prone to break during the packaging process. This is especially a problem for products which are packaged under vacuum or in a protective gas environment as the under-pressure or over-pressure in the packaging causes the paper to burst. Moreover, when packaging contents with hard and sharp parts, such as pieces of meat with bone or fruit with hard stems sticking out, the risk that a hard or sharp part of the packaged contents will puncture the paper material is evident.

There is consequently a need to provide further packaging for sensitive goods such as food products with improved recyclability, without sacrificing durability or packaging safety for the packaged goods.

### SUMMARY

One or more of the above objects may be achieved with a packaging in accordance with claim 1. Further embodiments are set out in the dependent claims, in the following description and in the drawings.

The packaging as disclosed herein comprises a support part for supporting packaged goods and a cover part for covering the packaged goods. The support part and the cover part are formed from separate materials and are sealed together in a border seal extending along superposed peripheral edge portions of the support part and the cover part. The cover part is a flat sheet material comprising or consisting of a structural paper layer. The structural paper layer of the cover part comprises fibres, the fibres of the structural paper layer consist of virgin softwood pulp fibers and constitute from 50% by weight to 100% by weight of the cover part, preferably from 70% by weight to 100% by weight of the cover part, and most preferred from 80% by weight to 100% by weight of the cover part, the paper layer having a basis weight of from 60 g/m² to 200 g/m² , such as from 80 g/m² to 120 g/m² as measured according to ISO 536 and an elongation at break of at least 8%, such as an elongation at break of from 9.5% to 17% in a cross machine direction, CD, and an elongation at break of at least 9%, such as an elongation at break of from 10% to 20% in a machine direction, MD, as measured according to ISO 1924-3. The paper layer of the cover part constitutes a structural layer which provides structural integrity, strength, tear resistance and puncture resistance to the cover part. As set out herein, the cover part may comprise further components including polymers such as polyesters or polyolefins; metal foils such as aluminium foil; or metallised polymers. However, it is an aim to provide a cover part which can be recycled as a paper material. A cover part being made from at least 50% by weight of paper can be recycled as paper, which is a considerable advantage. The cover part is preferably free from mixtures of plastic material. It may be particularly preferred that the cover part is free from plastic material other than polyolefin material. It may be particularly preferred that polyethylene is used as the only plastic material in combination with the paper layer of the cover part as disclosed herein.

The paper layer provides the cover part with good printability and may be provided with an outer protective coating which covers print on an outer external surface of the cover part, i.e. on the surface of the cover part which faces away from the support part.

The paper layer of the cover part may be referred to as an extensible kraft paper being made from long-fibre sulphate pulp. The papers which are suitable as a structural layer of the cover part have excellent tensile and strength properties and render the cover part durable and resistant to inadvertent tearing or puncturing during handling or when the packaging is used for containing items having irregular shapes with sharp and hard portions. The problem of puncturing or rupturing of a cover material when packing items, such as food items with hard and sharp portions is particularly experienced when vacuum packing such items in trays. Such materials have been developed for thermoforming applications such as thermoforming of trays and blisters, shaped or embossed boxes, etc. and are produced e.g. at Billerud Gruvön and sold as Billerud FibreForm®. A similar material is the Advantage Formable paper available from Mondi.

As set out herein, the cover part containing or consisting of the paper layer as disclosed herein is a flat layer. By the term *"flat layer"* as used herein, is implied a layer which has not been purposefully provided with a three-dimensional shape, such as by moulding or thermoforming.

The paper layer of the cover part may have a tensile strength of at least 3.5 kN/m, such as from 5 kN/m to 15 kN/m as measured according to ISO 1924-3 in a cross machine direction and a tensile strength of at least 5 kN/m such as from 7 kN/m to 20 kN/m as measured according to ISO 1924-3 in a machine direction.

The paper layer of the cover part may have a puncture resistance of at least 15N, such as from 16 N to 22N as measured according to EN 14477 with a flat needle, 0.8 mm. SS-EN 14477 is a standardized test method for determining the puncture resistance of a flexible packaging material such as multilayer flexible packaging materials.

The cover part may comprise a barrier layer and may have an oxygen permeability of less than 5 ml/m²/24h, such as an oxygen permeability of less than 3 ml/m²/24h as measured according to ASTM F 1927 at 23°C, 50% relative humidity. The barrier layer may be any suitable barrier material as known in the art such as ethylene vinyl alcohol (EVOH) an aluminium foil, or the like. The barrier layer helps ensure that the packaging has the desired gas and liquid permeability.

A water tight material (or packaging) may further be characterised by its water vapour transmission rate (WVTR), for example as measured by ASTM F1249. A water tight material typically has a WVTR as measured according to ASTM F1249 (in ml/m²/24 hrs measured at 25°C, 75% relative humidity) of below 10, more typically below 5, more typically below 2, desirably below 1.

The cover part may comprise a heat sealable layer, the heat sealable layer being applied on an inner surface of the cover part which is facing an inner surface of the support part. The border seal between the support part and the cover part may comprise a peripheral part of the heat sealable layer.

The heat sealable layer allows the cover part to be heat sealed to the support part thus enabling a heat sealed packaging to be formed. The heat sealable layer is therefore a surface layer of the cover part. When forming the packaging of the disclosure, both the inner surface of the cover part and the inner surface of the support part may be heat sealable layers.

Typical heat sealable materials are thermoplastic polymers with a relatively low melting point (e.g. 80-150°C, typically 100-130°C), such that when exposed to heat sealing conditions (temperatures of typically 120-160°C and pressure) the polymers soften or melt and may be used to form a bond after cooling and solidification.

Suitable heat sealable materials include APET (amorphous polyethylene terephthalate), polyethylene and polypropylene, desirably polyethylene and polypropylene with polyethylene being particularly suitable. An exemplary material that may be used is CA7230 of Borealis, which is a low density polyethylene that can be formed into films. The cover part and the support part are preferably free from polyamides.

Alternatively, the border seal between the cover part and the support part is and adhesive seal, such as a resealable adhesive seal.

The border seal between the support part and the cover part may be a peelable seal, implying that the cover part may be peeled away from the support part without causing functional damage to either one of the cover part and the support part.

The border seal between the support part and the cover part may be a resealable seal. Resealability may e.g. be provided as disclosed in EP3470344 A1 by arranging an internal layer of pressure sensitive adhesive inside of a heat sealable layer arranged as an outer layer on an inner surface of the cover part. Accordingly, a thermoplastic sealing layer which is used for sealing the cover part to the support part is arranged over the layer of pressure sensitive adhesive and is broken when tearing away the cover part from the support part, thereby exposing the pressure sensitive adhesive within the area of the seal. The exposed pressure sensitive adhesive may be used to reseal the package after an initial opening and may be opened and resealed again several times, preferably as many times as needed during the useful life time of the packaging.

The border seal is typically formed around the perimeter of the cover part and the support part, although some material may extend beyond the border seal if required. For instance, the cover part may extend beyond the border seal to provide a tab that allows the cover part to be more easily opened or removed.

By "heat sealing" is meant inputting energy to cause an area of a heat sealable layer to increase in temperature and cause the material in the heat sealable layer to locally soften or melt, thereby allowing the seal to form. The energy may be inputted by any means, for instance by pressing heated elements against the area (i.e. heat press sealing), via ultrasonic energy sources (i.e. ultrasonic bonding), via radiation (i.e. via a radiofrequency (RF) heat sealer), or induction heating.

The packaging may be an oxygen depleted packaging, such as a vacuum packaging or a packaging containing a protective gas.

The support part may be a three-dimensionally formed tray of plastic or paper material. Alternatively the support part may be a flat piece of material such as a plastic film, a carton layer or a flexible paper layer. The formed tray may be a low-profile tray for packaging cold cuts such as thinly sliced sausages, meat, cheese, etc., or a deep tray for packaging bulkier items such as fruit, vegetables, meat, etc.

The materials used in the disclosed packaging are generally laminates of two or more layers and may be combinations of different materials such as paper, polymer film and aluminium foil. In the case of plastic films or coatings being used, such plastic films or coatings may comprise sublayers which are generally not discernible by the naked eye but which may provide the films or coatings with sealability, barrier properties, printability, etc.

The support part may be a formed paper tray or a paper sheet. The paper tray or paper sheet may comprise or consist of a paper material being made from virgin softwood pulp and having a basis weight of from 100 g/m² to 300 g/m² as measured according to ISO 536. Accordingly, the support part or the packaging as disclosed herein may be formed from the same type of material as the cover part.

The support part is preferably formed from a laminate material comprising a heat sealable layer, a structural layer, and an optional barrier layer, with the heat sealable layer forming an outer layer of the laminate.

The various layers in the support part can be formed from the same or different materials as the corresponding layers of the cover part.

The support part may have a higher basis weight and/or be more rigid than the cover part.

### BRIEF DESCRIPTION OF THE DRAWINGS

The present invention will be further explained hereinafter by means of non-limiting examples and with reference to the appended drawings wherein:
- Fig. 1: shows a perspective view of a packaging with a support part and a cover part;
- Fig. 2: shows the packaging in Fig. 1 in the process of being opened; and
- Fig. 3: shows a cross-section through the cover part of the packaging in Figs. 1 and 2.

### DETAILED DESCRIPTION

It is to be understood that the drawings are schematic and that individual components or features, such as layers of material are not necessarily drawn to scale. The packaging shown in the figures is provided as an example only and should not be considered limiting to the invention as disclosed herein. In particular, it is to be understood that the size and shape of the packaging could be different from that shown in the figures. The packaging as disclosed herein is primarily intended as a food packaging. However, it is to be understood that the packaging may be used for any type of goods, as found suitable.

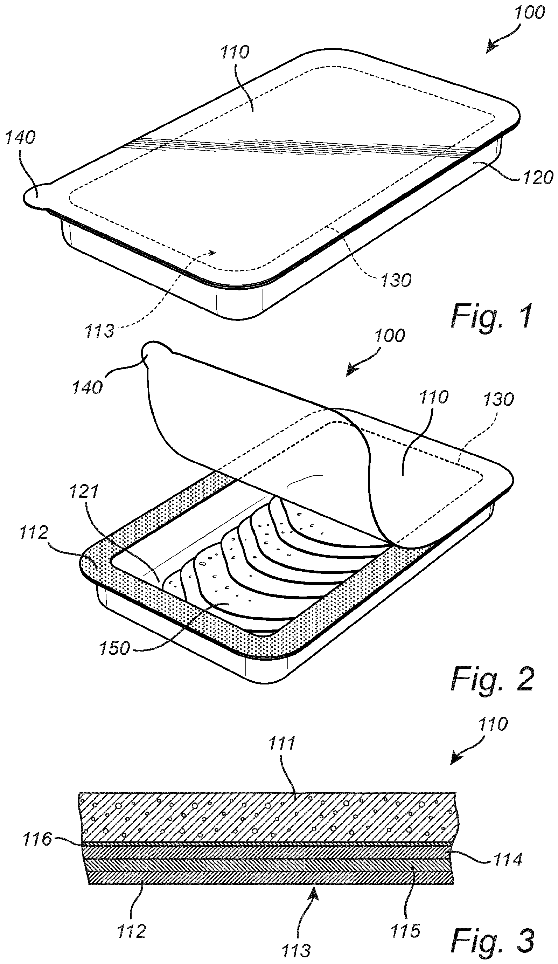

An exemplary packaging 100 is shown in Figs. 1 and 2. The packaging comprises a cover part 110 and a support part 120, which together form an enclosure around the contents 150, in this case a sliced food product which is placed on an inner surface 121 of the support part 120.

The support part 120 and the cover part 110 are formed from separate materials which are sealed together in a border seal extending along superposed peripheral edge portions of the support part 120 and the cover part 110. In the packaging 100 in Figs. 1 and 2, the border seal 130 is a heat seal formed from a peripheral portion of a heat sealable layer of one or both of the support part 120 and the cover part 110. However, adhesive seals are also contemplated for the packaging as disclosed herein.

As illustrated by Fig. 3, the cover part 110 comprises a structural paper layer 111 which is constituted by virgin softwood pulp fibers and which constitutes at least 50% by weight of the cover part 110. The paper layer may have a basis weight of from 60 g/m² to 200 g/m² as measured according to ISO 536.

Preferably, the structural paper layer 111 of the cover part has a tensile strength of at least 3.5 kN/m, such as from 5 kN/m to 15 kN/m as measured according to ISO 1924-3 in a cross machine direction and a tensile strength of at least 5 kN/m such as from 7 kN/m to 20 kN/m as measured according to ISO 1924-3 in a machine direction of the paper layer 111.

The paper layer 111 of the cover part 110 preferably has an elongation at break of at least 8%, such as an elongation at break of from 9.5% to 17% in a cross machine direction of the paper layer and an elongation at break of at least 9%, such as an elongation at break of from 10% to 20% in a machine direction of the paper layer as measured according to ISO 1924-3.

The paper layer of the cover part preferably has a puncture resistance of from 15N to 22N as measured according to SS-EN 14477.

The structural layer is an extensible Kraft paper layer having tear resistance and puncture resistance which far exceeds the tear resistance and puncture resistance of paper materials which have conventionally been used as cover layers for packaging purposes.

The cover part 110 of the packaging 100 further comprises a heat sealable layer 112, the heat sealable layer being applied on an inner surface 113 of the cover part 110 which inner surface 113 is facing the inner surface 121 of the support part 120. The border seal 130 between the support part 120 and the cover part 110 comprises a peripheral part of the heat sealable layer 112.

The cover part 110 further comprises a barrier layer 114 preferably providing the cover part 110 with an oxygen permeability of less than 5 ml/m²/24h, such as an oxygen permeability of less than 3 ml/m²/24h as measured according to ASTM F 1927.

The cover part 110 of the packaging 100 shown in Figs. 1 and 2 additionally contains an adhesive layer 115. The adhesive layer is an internal layer of pressure sensitive adhesive which is arranged immediately inside the heat sealable layer 112 which is arranged on the inner surface 113 of the cover part 110. The cohesive strength between the adhesive layer 115 and the heat sealable layer 112 of the cover part is less than the bond strength of the border seal which is formed between the heat sealable layer 112 of the cover part 110 and the support part 120.

A tie layer 116 is arranged between the structural paper layer and the barrier layer 114. It is to be understood that the layers which are shown in Fig. 3 may be fewer or more than those shown and that the layers which are shown in Fig. 3 are optional components of a cover part for a packaging as disclosed herein. Hence, one or more of the heat sealable layer 112, the adhesive layer 115 and the barrier layer 114 may be omitted if desired. Accordingly, in the simplest embodiment of a packaging as disclosed herein, only the structural paper layer 111 is a necessary component of the cover part.

The support part 120 as shown in Figs. 1 and 2 is a three-dimensionally formed tray. The material in the support part 120 may be any suitable formable material such as a thermoformable plastic material or a formable paper based material. The support part may comprise or consist of a structural layer of the same type of paper material as in the cover part and may contain further layers such as a heat sealing layer, a barrier layer, etc. in the same manner as the cover part.

As set out herein, the support part may be a planar sheet of material such as a plastic film or film laminate; a paper based material such as a carton material or a paper material of the same type as in the cover part, the paper based material being used alone or as a structural layer in a laminate material.

The basis weight of the support part may be higher than the basis weight of the cover part and/or the support part may have a higher stiffness than the cover part.

Fig. 2 shows the packaging 100 in the process of being opened, such that the cover part 110 has been partly separated from the support part 120. Opening of the packaging 100 is carried out by gripping a pull tab 140 formed by the cover part 110 and being arranged in a corner of the packaging 100 and pulling away the cover part 110 from the support part 120. The portion of the heat sealable layer 112 of the cover part 110 which has been heat sealed to the support part 120 remains firmly adhered to the support part 120. Thereby the part of the heat sealable layer 112 which remains attached to the support part 120 is being peeled away from the adhesive layer 115 of the cover part 110 such that the internal adhesive layer 115 becomes an external, exposed layer within the area corresponding to the border seal 130.

The exposed pressure sensitive adhesive may be used to reseal the package after the initial opening of the packaging 100. Preferably, the packaging 100 can be opened and resealed again several times, as needed when taking contents out of the packaging 100.

## Claims

1. A packaging (100) comprising a support part (120) for supporting packaged goods (150) and a cover part (110) for covering the packaged goods (150), the support part (120) and the cover part (110) being formed from separate materials and being sealed together in a border seal (130) extending along superposed peripheral edge portions of the support part (120) and the cover part (110), the cover part (110) being a flat sheet material comprising or consisting of a structural paper layer (111), **characterised in that** the structural paper layer (111) of the cover part (110) comprises fibres, the fibres of the structural paper layer (111) consisting of virgin softwood pulp fibers and constituting from 50% by weight to 100% by weight of the cover part (110), the structural paper layer (111) having a basis weight of from 60 g/m² to 200 g/m² as measured according to ISO 536 and an elongation at break of at least 8%, such as an elongation at break of from 9.5% to 17% in a cross machine direction (CD), and an elongation at break of at least 9%, such as an elongation at break of from 10% to 20% in a machine direction (MD) as measured according to ISO 1924-3.

2. A packaging (100) according to claim 1, wherein the structural paper layer (111) of the cover part (110) has a tensile strength of at least 3.5 kN/m, such as from 5 kN/m to 15 kN/m as measured according to ISO 1924-3 in a cross machine direction (CD) and a tensile strength of at least 5 kN/m such as from 7 kN/m to 20 kN/m as measured according to ISO 1924-3 in a machine direction (MD).

3. A packaging (100) according to claim 1 or 2, wherein the structural paper layer (111) of the cover part (110) has a puncture resistance of from 15N to 22N as measured according to SS-EN 14477.

4. A packaging (100) according to any one of the preceding claims, wherein the cover part (110) comprises a heat sealable layer (112), the heat sealable layer (112) being applied on an inner surface (113) of the cover part (110) which inner surface (113) is facing an inner surface (121) of the support part (120), the border seal (130) between the support part (120) and the cover part (110) comprising a peripheral part of the heat sealable layer (112).

5. A packaging (100) according to any one of the preceding claims, wherein the cover part (110) comprises a barrier layer (114) and has an oxygen permeability of less than 5 ml/m²/24h, such as an oxygen permeability of less than 3 ml/m²/24h as measured according to ASTM F 1927.

6. A packaging (100) according to any one of the preceding claims, wherein the cover part (110) is polyamide free.

7. A packaging (100) according to any one of the preceding claims, wherein the border seal (130) between the support part (120) and the cover part (110) is a peelable seal.

8. A packaging (100) according to any one of the preceding claims, wherein the border seal (130) between the support part (120) and the cover part (110) is a resealable seal.

9. A packaging (100) according to any one of the preceding claims, wherein the packaging (100) is an oxygen depleted packaging (100), such as a vacuum packaging (100) or a packaging (100) containing a protective gas.

10. A packaging (100) according to any one of the preceding claims, wherein the support part (120) is a three-dimensionally formed tray.

11. A packaging (100) according to any one of the preceding claims, wherein the support part (120) is a formed paper tray or a structural paper layer (111), such as a paper tray or structural paper layer (111) comprising or consisting of a paper material being made from virgin softwood pulp and having a basis weight of from 100 g/m² to 300 g/m² as measured according to ISO 536.

12. A packaging (100) according to any one of the preceding claims, wherein the packaging (100) is a food packaging (100).
